# EUROPEAN PATENT APPLICATION

(11) **EP 4 703 584 A1**
(43) Date of publication of application: **04.03.2026**
(21) Application number: 24382944.7
(22) Date of filing: 02.09.2024
(51) Int. Cl.: F03D 7/02

(54) **METHOD FOR OPERATING A WIND TURBINE AND WIND TURBINE**

(71) Applicant: Nordex Energy Spain, S.A.U., 31395 Barasoain (Navarra) (ES)
(72) Inventor: GIL SOTO, José Javier, 31395 Barásoain (ES); MERCADER GÓMEZ, Pedro, 31395 Barásoain (ES)
(74) Representative: Völkl Siebenson Patentanwälte - Partnerschaft mbB

(57) **Abstract**

The method is for operating a wind turbine (100) having a rotatable nacelle (40), a rotor (10) with at least one rotor blade (b_j), wherein the rotor is mounted on the nacelle, and at least one drive (d_i) for rotating the nacelle by exerting torque. The method comprises a step of providing first information (I1) which is representative of a position setpoint (Pn) of the nacelle and a step of providing second information (I2) which is representative of an external torque (Myaw) acting on the nacelle due to the aerodynamics of the rotor during rotation caused by wind. In a further step, an operating setpoint (OS_i) for the at least one drive is determined depending on the first and the second information. The operating setpoint is determined such that, when the at least one drive is operated according to the operating setpoint, the at least one drive brings or keeps the nacelle at the position setpoint by exerting torque. The second information is used in a feedforward manner for the determination of the operating setpoint.

## Description

The present disclosure relates to a method for operating a wind turbine. Furthermore, the disclosure relates to a computer program, a computer-readable data carrier, a control system and a wind turbine.

Wind turbines are widely known and are used to convert wind energy into electrical energy. The nacelle of the wind turbine needs to be rotated during operation, even at extreme conditions. Varying external forces acting on the nacelle may result in a continuous movement of the nacelle which can lead to damage of components of the yaw system.

One object to be achieved is to provide a method which contributes to a longer lifetime of the wind turbine, particularly of the yaw system. Further objects to be achieved are to provide a computer program, a computer-readable data carrier, a control system and a wind turbine for executing such a method.

First, the method for operating a wind turbine is specified.

According to an embodiment, the method is for operating a wind turbine having a rotatable nacelle, a rotor with at least one rotor blade, wherein the rotor is mounted on the nacelle, and at least one drive for rotating the nacelle by exerting torque. The method comprises a step of providing first information which is representative of a position setpoint of the nacelle and a step of providing second information which is representative of an external torque acting on the nacelle due to the aerodynamics of the rotor during rotation caused by wind. In a further step, an operating setpoint for the at least one drive is determined depending on the first and the second information. The operating setpoint is determined such that, when the at least one drive is operated according to the operating setpoint, the at least one drive brings or keeps the nacelle at the position setpoint by exerting torque. The second information is used in a feedforward manner for the determination of the operating setpoint.

Usually, the torque demand for the drive(s) of a yaw system is derived from the desired nacelle position and yaw speed errors. Especially in the case that the yaw system does not use brakes for keeping the nacelle in position, it can happen that the yaw system is continuously moving due to external excitations, such as 3P excitations. The continuous movement can result in backlash, which has been identified as an important source of noise. The movement can also harm the yaw system.

The external excitations result, at least partially, from forces, like the thrust force, acting on the rotor and being transferred to the nacelle. The present invention contributes to a reduced movement since the torque demand for the drives coming from the aerodynamic forces acting on the rotor blades is anticipated. Indeed, by considering information which is representative of an external torque acting on the nacelle and caused by the aerodynamics of the rotor during its rotation in a feedforward manner, it can be quickly and efficiently reacted on changing external conditions and, accordingly, the continuous movement of the yaw system can be counteracted with the help of the drive(s) used for rotating the nacelle.

The method specified herein is, in particular, a computer-implemented method, i.e. is performed with the help of a computer or a processor.

The rotatable nacelle is, in particular, rotatable in yaw direction or azimuthal direction which is a rotational direction around a vertical axis or around the length axis of the tower of the wind turbine.

The rotor is coupled to the nacelle, e.g. via a drive train. Particularly, the rotor is coupled to the nacelle in such a way that tilt or yaw bending moments acting on the rotor due to the aerodynamics of the rotor during its rotation are transmitted at least partially to the nacelle. The rotor comprises one or more rotor blades, e.g. three rotor blades. All features disclosed herein for one rotor blade are also disclosed for all other rotor blades.

The wind turbine further comprises at least one drive for rotating the nacelle. Particularly, the wind turbine may comprise several drives, e.g. six drives, for rotating the nacelle. All features disclosed herein for one drive are also disclosed for all other drives.

The at least one drive may comprise an electric motor. Moreover, the drive may comprise a gearbox and a pinion. The electric motor applies an input rotational speed and an input torque to the gearbox, which is thereby transformed to an output rotational speed and an output torque and is applied to the pinion. By way of example, the transmission ratio between the input rotational speed and the output rotational speed of the gearbox of the drive is at least 100 or at least 1000. That is, the electric motor, on one side of the gearbox, rotates at least 100 or at least 1000 times faster than the pinion on the other side of the gearbox.

The at least one drive may be attached to the nacelle so that it rotates together with the nacelle. For example, the drive then meshes with and exerts torque to a non-rotatable element which in turn may cause the rotation of the nacelle. Alternatively, the drive is rotationally fixed and does not rotate together with the nacelle. The drive may then mesh with the nacelle and may exert torque to it, which can cause its rotation.

The first information is representative of a position setpoint. A setpoint herein defines a certain target to be achieved when operating the wind turbine. The position setpoint is the target value of the position of the nacelle. The position setpoint is, in particular, an angle, e.g. between 0° and 360°.

The second information is representative of an external torque acting on the nacelle. The external torque is caused by the aerodynamics of the rotor during its rotation. The rotation is, in particular, caused by wind. The external torque may be the yaw moment acting on the nacelle. The aerodynamics of the rotor are, inter alia, related to the pitch angle of the rotor blade(s). Indeed, there is an aerodynamic relation between the pitch angle and a force in the z-direction, namely the thrust force. Thus, different thrust forces acting on different rotor blades can result in a yaw and/or tilt moment acting on the rotor. This is transferred, for example, via the drive train to the nacelle.

Different thrust forces for different blades can, for example, be caused by shadowing effects when rotor blade(s) pass the tower or by local turbulences. Another source of a strong yaw and/or tilt moment acting on the rotor may be a stuck blade. With a rotor having three rotor blades, 3P oscillations are particularly present in the yaw system.

Herein, when information is representative of a certain quantity or certain quantities, this means that the quantity or quantities can be extracted from the information, either directly, or the quantity/quantities can at least be derived from the information. In other words, the quantity/quantities is/are present in the information, or at least data are present in the information, from which the quantity/quantities can be derived or determined or calculated, respectively. Furthermore, here and in the following, information is, in particular, electronic information, such as electronic data.

The operating setpoint for the at least one drive is determined depending on the first and the second information. In case of several drives, and operating setpoint for each of these drives may be determined depending on the first and the second information. The operating setpoint defines the target operation of the drive. An operating setpoint is, in particular, equivalent to control/operation information for the at least one drive. A control module can convert the operating setpoint into an actual electric signal, e.g. a PWM signal, with which the drive is then controlled so that a torque exerted by the drive is adapted.

The operating setpoint is determined such that, when the at least one drive is operated according to the operating setpoint, the at least one drive brings or keeps the nacelle at the position setpoint by exerting torque. In other words, the operating setpoint is configured to cause an operation of the at least one drive such that the at least one drive brings or keeps the nacelle at the position setpoint by exerting torque. To bring or keep the nacelle at the position setpoint means that the drive or drives are operated such that the difference between the actual position of the nacelle and the position setpoint is minimized. In other words, the nacelle is kept in or brought to a position which corresponds to the position setpoint.

The operating setpoint for the at least one drive is determined by considering the second information. Particularly, the second information is used or considered in a feedforward manner for determining the operating setpoint for the at least one drive. That is, the control system for operating the wind turbine uses a feedforward pathway for the second information.

For example, a preliminary operating setpoint is determined first. The second information is considered in a feedforward manner by adding a correction value to the preliminary operating setpoint, wherein the correction value is determined depending on the second information. The sum of the preliminary operating setpoint and the mentioned correction value is then the final operating setpoint.

The first and/or the second information may be provided repeatedly or continuously. Depending on this, the operating setpoint is then determined repeatedly or continuously in order to repeatedly or continuously anticipated the torque demand for the at least one drive due to the external torque acting on the nacelle.

According to a further embodiment, the second information is determined depending on measurements. The measurements are, for example, taken at the at least one rotor blade. The measurements may be taken with the help of at least one sensor assigned to the at least one rotor blade. The sensor may be a strain sensor. The sensor may be a gauge strain sensor or a fiber optic strain sensor. In case of two or more rotor blades, the second information is, for example, determined depending on measurements taken at each of the rotor blades. Each rotor blade may be assigned its own strain sensor.

According to a further embodiment, the method comprises a step of determining third information depending on the measurements. The third information is representative of at least one bending moment acting on the at least one rotor blade. The bending moment is, for example, the out-of-plane bending moment of the rotor blade resulting mainly in a flap-wise deflection of the rotor blade(s).

According to a further embodiment, the second information is determined depending on the third information by using a Coleman transformation. For example, the Coleman transformation transforms the bending moment acting on the rotor blade in the rotating reference frame of the rotor blade into a moment acting on the rotor in the fixed reference frame.

According to a further embodiment, the second information is representative of the yaw moment acting on the nacelle. The yaw moment acting on the nacelle can be calculated from a yaw moment acting on the rotor in a straightforward manner.

The yaw moment is known to the skilled person. It is the moment trying to rotate the rotor or the nacelle, respectively, around an axis running in vertical direction or running parallel to the length axis of the tower.

According to a further embodiment, the method uses a controller which determines fourth information depending on the first information. By way of example, the controller is a proportional (P-) controller or a proportional integral (PI-) controller.

According to a further embodiment, the operating setpoint is determined depending on a combination of the second information and the fourth information. The second and the fourth information are merged or added, for example. The fourth information may be representative of the preliminary operating setpoint mentioned before.

According to a further embodiment, the method further comprises a step of providing fifth information. The fifth information is representative of a rotational speed setpoint of the at least one drive for bringing or keeping the nacelle at the position setpoint. The rotational speed setpoint is the target value of the rotational speed of the at least one drive for bringing or keeping the nacelle at the position setpoint. For example, the fifth information is determined depending on the first information. That is, the rotational speed setpoint may be determined depending on the position setpoint. For this purpose, a position controller may be used.

The "rotational speed of the at least one drive" herein means, in particular, the rotational speed as input into the gearbox, i.e. as provided by the electric motor.

According to a further embodiment, the controller which determines the fourth information is a speed controller. This speed controller determines the fourth information depending on the fifth information. The speed controller is responsible for controlling the rotational speed of the at least one drive. The speed controller determines a control variable depending on the deviation between the actual rotational speed of the at least one drive and the rotational speed setpoint for the at least one drive. The control variable is, for example, a torque setpoint defining the desired torque exerted by the at least one drive. The operating setpoint may be this control variable or may be determined depending on this control variable. Particularly, the fourth information is representative of the control variable of the speed controller.

According to a further embodiment, the fourth information is representative of a first torque setpoint for the at least one drive. The first torque setpoint may also be referred to as preliminary torque setpoint. Particularly, the first torque setpoint may be the preliminary operating setpoint mentioned above. The first torque setpoint may be the control variable of the controller.

According to further embodiments, the operating setpoint is representative of a second torque setpoint being the sum of the first torque setpoint and a value which is proportional to the external torque acting on the nacelle due to the aerodynamics of the rotor. Particularly, the second torque setpoint is determined in the feedforward manner as explained above. The second torque setpoint may be the above-mentioned final operating setpoint.

According to a further embodiment, the value being proportional to the external torque acting on the nacelle due to the aerodynamics of the rotor is the external torque divided by the number of drives used for rotating the nacelle.

According to a further embodiment, the method comprises a step of providing sixth information which is representative of the actual rotational speed of the at least one drive. The actual rotational speed of the at least one drive may be determined with the help of measurements. For example, an incremental encoder may be used to measure the rotational speed of the drive.

According to a further embodiment, the operating setpoint is determined also depending on the sixth information, i.e. the sixth information is used additionally to the first, second and fifth information. Particularly, the operating setpoint is determined by using a feedback loop with the fifth and the sixth information as input information so that the difference between the actual rotational speed and the rotational speed setpoint is minimized. The feedback loop is, in particular, a negative feedback loop. For example, the fifth and sixth information are repeatedly or continuously provided and compared. Depending on this, the operating setpoint is determined repeatedly or continuously in order to make the actual rotational speed to match the rotational speed setpoint. Particularly, the speed controller is used for minimizing the difference between the actual rotational speed and the rotational speed setpoint.

According to a further embodiment, the method comprises a step of providing seventh information which is representative of the actual position of the nacelle. The seventh information may be determined depending on measurements. For example, the rotational position of the nacelle is determined with the help of an incremental encoder.

According to a further embodiment, the operating setpoint is also determined depending on the seventh information. For example, this is done by using a further feedback loop, particularly a negative feedback loop, with the first and the seventh information as input information so that the difference between the actual position and the position setpoint is minimized.

The seventh information and, if applicable, the first information may be repeatedly or continuously provided and, accordingly, the operating setpoint is repeatedly or continuously determined and generated depending on the seventh and the first information in order to make the actual position to match the position setpoint.

The feedback loop using the first and seventh information may be realized with the help of a controller, herein also referred to as "position controller". Depending on the deviation between the actual position and the position setpoint, the position controller determines a control variable, wherein the operating setpoint may be determined depending on this control variable. The control variable is, for example, a rotational speed setpoint used as an input for the above-mentioned speed controller.

According to a further embodiment, the wind turbine comprises two or more drives, e.g. at least four or at least six drives for rotating the nacelle. A corresponding operating setpoint may be determined for each drive. Each operating setpoint is then determined depending on the first and the second information and optionally, depending on the fourth, fifth, sixth and/or seventh information. For example, each drive is assigned an individual speed controller.

According to a further embodiment, the method comprises a step of providing eighth information which is representative of the actual torque difference between the actual torques exerted by the drives. By way of example, the actual electric currents with which the electric motors are actually operated are determined and these currents are then stored in the eighth information. Indeed, for determining a torque exerted by a drive, a current sensor may be used which determines the actual electric current with which the drive is operated. The actual electric current may be determined from the PWM-signals transmitted to the drive by using a motor model. The electric current is proportional to the actually exerted torque.

Alternatively, it is possible to directly measure the torques provided by the drives or the torque difference and to store these measurements in the eighth information.

According to a further embodiment, the method comprises a step of providing ninth information. The ninth information is representative of a torque difference setpoint. The torque difference setpoint is the target value of the difference between the torques of at least two drives. For example, the torque difference setpoint is a positive number.

According to a further embodiment, operating setpoints are determined for all drives used for rotating the nacelle. The operating setpoints for the drives are also determined depending on the eighth and ninth information, namely by using a feedback loop, particularly a negative feedback loop, with the eighth and the ninth information as input information so that the difference between the torque difference setpoint and the actual torque difference is minimized. Particularly, the eighth and ninth information are repeatedly or continuously provided and compared. Depending on this, the operating setpoints are repeatedly or continuously determined or adjusted, respectively, in order to make the actual torque difference to match the torque difference setpoint.

Determining the operating setpoints depending on the eighth and the ninth information by using the feedback loop may be realized with the help of a controller, herein also called "tension controller". The tension controller is, for example, a proportional (P-) controller. For example, depending on the deviation between the actual torque difference and the torque difference setpoint, the tension controller determines at least one control variable. The operating setpoints may be determined depending on this control variable. By being operated according to the operating setpoints, the operation of the drives can then be adjusted according to the control variable.

According to further embodiment, the method comprises the step of determining tenth information depending on the eighth and the ninth information. The tenth information is representative of an offset rotational speed and the offset rotational speed depends on the difference between the torque difference setpoint and the actual torque difference. The offset rotational speed is, in particular, a target difference between the rotational speeds of the drives. The greater the difference between the torque difference setpoint and the actual torque difference, the greater the offset rotational speed.

Determining the tenth information may be done by the above-mentioned tension controller. By way of example, the offset rotational speed is the control variable determined with the tension controller.

According to a further embodiment, the fifth information is determined depending on the tenth information such that the rotational speed setpoint of at least one drive is the rotational speed setpoint of another drive minus the offset rotational speed. By way of example, if the actual torque difference is much smaller than the torque difference setpoint, the offset rotational speed is determined to be comparatively large and, accordingly, the rotational speed setpoints of the drives are much different. On the other hand, if the actual torque difference is equal to the torque difference setpoint, then the offset rotational speed may be smaller or may be zero.

Next, the computer program, the computer-readable data carrier and the control system are specified.

According to an embodiment, the computer program comprises instructions which, when the program is executed by a control system, cause the control system to carry out the method for operating a wind turbine according to any one of the embodiments described herein.

According to an embodiment, the computer-readable data carrier has the computer program stored thereon.

According to an embodiment, the control system comprises means configured to execute the method for operating a wind turbine according to any one of the embodiments described herein. Particularly, the method is carried out when the above-mentioned computer program is executed by the control system.

The control system may comprise at least one processor and/or at least one programmable logic controller, plc for short. Additionally, the control system may comprise one or more drive control modules which convert the operating setpoint(s) into actual electric signals, e.g. PWM signals, with which the one or more drives are then controlled. The control system may be part of the wind turbine.

According to further embodiment, the control system comprises means with the help of which a bending moment, e.g. the out-of-plane bending moment, of the at least one rotor blade is determinable. Particularly, the means are configured to determine the out-of-plane bending moment of the at least one rotor blade. Each rotor blade may be assigned individual means for determining the bending moment of the respective rotor blade.

According to a further embodiment, the means comprise at least one strain sensor coupled to the at least one rotor blade. For example, each rotor blade is assigned at least one individual strain sensor for determining the bending moment. The strain sensor may be a fiber optic strain sensor or strain gauge sensor.

Next, the wind turbine is specified.

According to an embodiment, the wind turbine comprises a rotatable nacelle and a rotor with at least one rotor blade. The rotor is mounted on the nacelle. The wind turbine further comprises at least one drive for rotating the nacelle by exerting torque. Moreover, the wind turbine comprises the control system specified herein. The control system is signally connected or signally connectable to the at least one drive in order to enable an operation of the at least one drive according to the operating setpoint.

Thus, the wind turbine is, in particular, configured to execute the method according to any of the embodiments described herein. All features disclosed for the method are also disclosed for the wind turbine and vice versa. When the method is executed, the at least one drive is operated according to the operating setpoint.

Hereinafter, the method for operating a wind turbine, the control system and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.
Figure 1 shows an exemplary embodiment of the wind turbine,
Figure 2 shows an exemplary embodiment of a yaw system in a perspective view,
Figure 3 shows an exemplary embodiment of a yaw system in a cross-sectional view,
Figure 4 shows an exemplary embodiment of a yaw system in a top view,
Figure 5 shows a flowchart of an exemplary embodiment of the method for operating a wind turbine,
Figure 6 shows a flowchart of another exemplary embodiment of the method for operating a wind turbine,
Figure 7 shows an exemplary embodiment of the control system,
Figure 8 shows an exemplary embodiment of an operation of a drive control module,
Figure 9 shows simulations of a wind turbine operated with an exemplary embodiment of the method and with a different (standard) method.

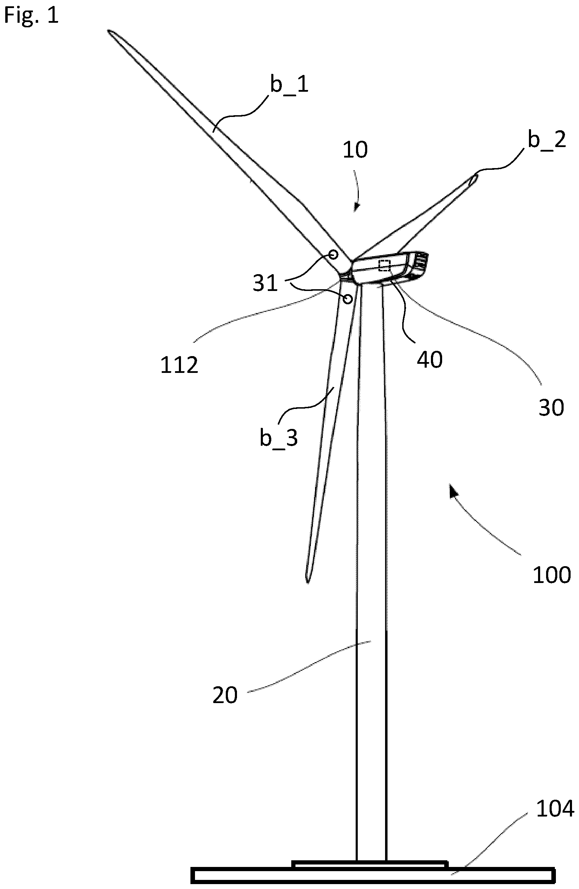

Figure 1 shows a wind turbine 100 which comprises a tower 20. The tower 20 is fixed to the ground by means of a foundation 104. A nacelle 40 is rotatably mounted at one end of the tower 20, opposite to the ground. The nacelle 40 comprises, for example, a generator which is coupled to a rotor 10 via a gearbox (not shown). The rotor 10 comprises three (wind turbine) rotor blades b_1, b_2, b_3, which are arranged on a rotor hub 112, said rotor hub 112 being connected to a rotor shaft (not shown).

During operation, the rotor 10 is set in rotation by an air flow, for example wind. This rotational movement is transmitted to the generator via the drive train comprising, inter alia, the rotor shaft and the gearbox. The generator converts the mechanical energy of the rotor 10 into electrical energy.

For optimizing the energy output of the wind turbine 100, the nacelle 40 has to be rotated into the wind. Moreover, the pitch angles of the rotor blades b_1, b_2, b_3 have to be set according to the wind speed. This is done with the help of drives (not shown) which rotate the rotor blades b_1, b_2, b_3 and the nacelle 40 to a respective target position. In order to control and operate the drives, the wind turbine comprises a control system 30 which determines operating setpoints with which the drives are operated. The control system 30 is located in the nacelle 40.

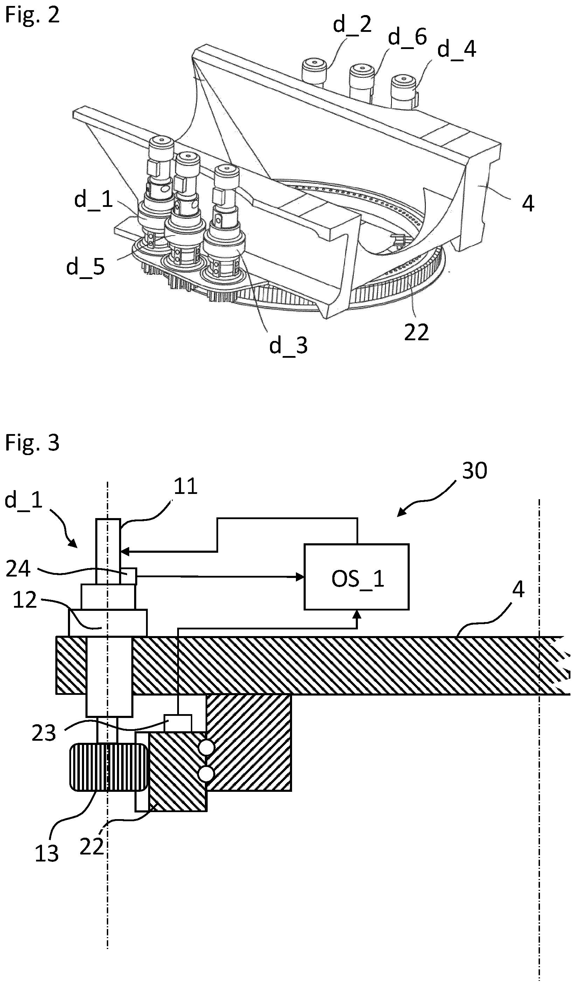

Figure 2 shows a detailed view of an exemplary embodiment of a yaw system, e.g. the yaw system of the wind turbine of figure 1. Here, only the carrier 4 of the nacelle 40 is shown. This carrier 4 is rotatable together with the rest of the nacelle 40. In order to rotate the carrier 4, six drives d_1 to d_6 are mounted on the carrier 4. These drives d_1 to d_6 mesh with a yaw bearing 22 of the yaw system. The yaw bearing 22 is fixed with respect to, for example, the tower 20. The carrier 4 is rotated when the drives d_1 to d_6 rotate.

Figure 3 shows an exemplary embodiment of the yaw system, e.g. of the yaw system of figure 2, in more detail and in a cross-sectional view. The yaw bearing 22 is mounted on the tower 20. Figure 3 shows only one of the drives, namely drive d_1. All other drives may be formed identically.

Drive d_1 comprises an electric motor 11. The electric motor 11 is operated depending on an operating setpoint OS_1 generated by the control system 30. Depending on the operating setpoint OS_1, drive d_1 is rotated and thereby exerts a certain torque. The rotational speed and torque of the electric motor 11 is transmitted to a pinion 13 of the drive d_1 with the help of a gearbox 12. The transmission ratio of the gearbox 12 is, for example, at least 100 or at least 500 so that the electric motor 11 rotates much faster than the pinion 13. On the other hand, the torque exerted by the pinion 13 onto the yaw bearing 22 is much larger than the torque provided by the electric motor 11.

In order to determine the actual position of the rotatable carrier 4, the control system 30 comprises an incremental encoder 23. The measurements taken with the help of the incremental encoder 23 are processed by the control system 30. Moreover, another incremental encoder 24 is provided, with the help of which the actual rotational speed of the electric motor 11 of the drive d_1 is determinable. These measurements are also processed by the control system 30. For each drive d_1 to d_6, an individual incremental encoder 24 may be provided.

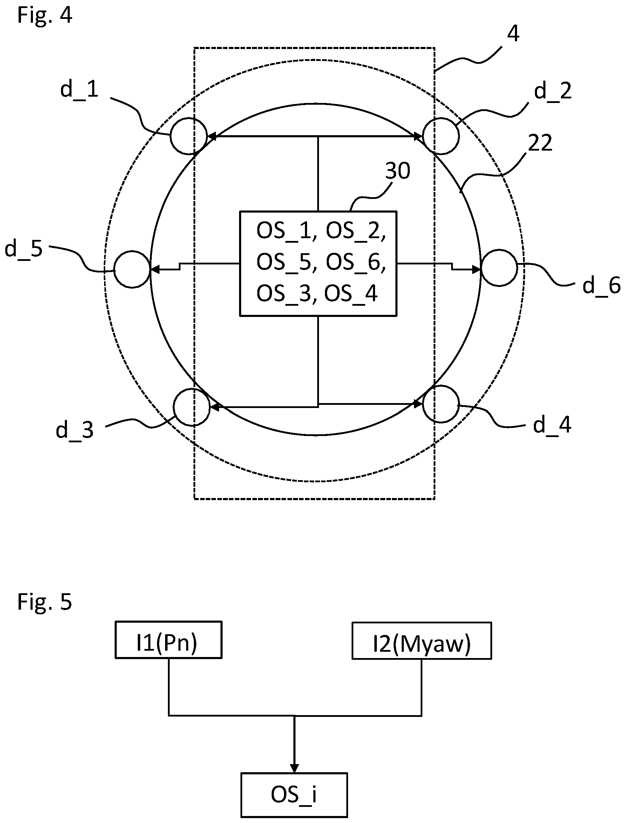

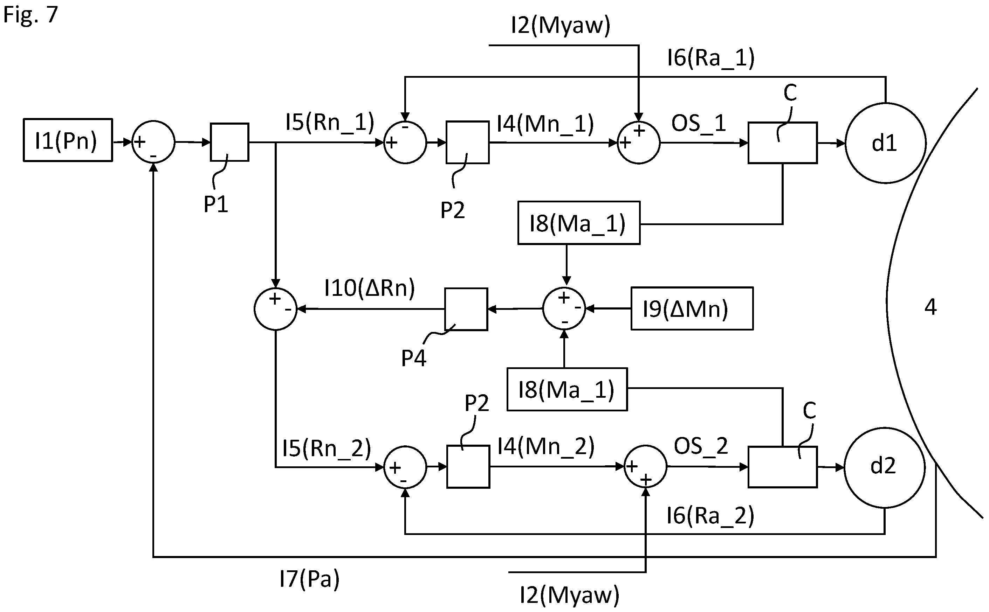

Figure 4 shows an exemplary embodiment of a yaw system, e.g. of the yaw system of figures 2 and 3, in top view. As can be seen here, all six drives d_1 to d_6 are operated according to corresponding operating setpoints OS_1 to OS_6, OS_i for short, determined with the control system 30. The operating setpoints OS_i may be configured such that different drives d_1 to d_6, d_i for short, exert different torques. How this can be achieved is explained in more detail in connection with figure 7.

A possible way to operate the yaw system of figures 2 to 4 is to group the drives into two groups. The left group or first group, respectively, comprises drives d_1, d_3 and d_5. The right group or second group, respectively, comprises drives d_2, d_4 and d_6. Drive d_1 may be the master drive. The torques exerted by all other drives may be selected depending on the torque exerted by drive d_1. For example, drives d_3 and d_5 are operated such that they always exert the same torque as drive d_1. The drives of the right group, i.e. drives d_2, d_4 and d_6, may be operated such that they always exert the same torques, but torques with absolute values or numeric values which are lower or at most the same as the absolute value or the numeric value of the torque of drive d_1. The torques of the left side and of the right side may differ from each other by a torque difference setpoint, e.g. of 10 Nm.

The tension induced by drives exerting different torques helps to keep the nacelle at position at low external load without the need of additional brakes. However, at higher external loads, variations in the external load can lead to a continuous movement of the nacelle. This continuous movement may harm components of the yaw system. A varying external load results, for example, from the aerodynamics of the rotor during its rotation. Indeed, strong forces act on the rotor during its rotation, particularly a thrust force. These forces are also partially transmitted to the nacelle. Variations in the forces acting on the rotor can, for example, be caused by shadowing effects when a rotor blade passes the tower or if the pitch angles of the rotor blades differ from each other, like in a stuck blade event. This may cause a large yaw moment acting on the nacelle and trying to rotate the nacelle. This requires an adjustment of the torques exerted by the drives. The present invention helps to reduce the continuous movement of the nacelle caused by varying external torque acting on the nacelle due to the aerodynamics of the rotor during its rotation. It further helps to reduce the rotational speeds and torques with which the drives are operated in order to keep or bring the nacelle into the desired position.

Figure 5 shows a flowchart of a first exemplary embodiment of the method for operating a wind turbine. First information I1 is provided which is representative of a position setpoint Pn of the nacelle. Furthermore, second information I2 is provided which is representative of an external torque Myaw acting on the nacelle, wherein the external torque Myaw is due to the aerodynamics of the rotor during rotation caused by wind. Operating setpoints OS_i are then determined for the drives depending on the first I1 and the second I2 information. The operating setpoints OS_i are determined such that, when the drives are operated according to their respective operating setpoints OS_i, the drives bring or keep the nacelle at the position setpoint Pn by exerting torque. The second information I2 is used in a feedforward manner for the determination of the operating setpoints OS_i.

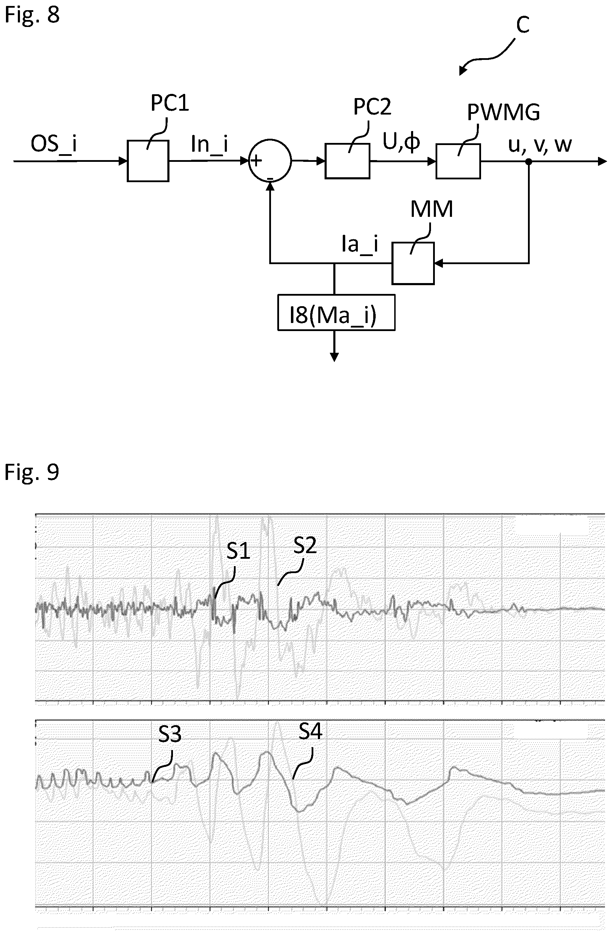

With this method, a baseline operating setpoint for the drives d_i is determined by feed forwarding the torque due to the aerodynamics of the rotor. This baseline operating setpoint considers the external torque acting on the nacelle. This baseline operating setpoint can be completed with any other control scheme. In other words, the control of the drives anticipates the varying external torque due to the aerodynamics of the rotor. Continuous movement of the nacelle due to the varying external torque can, in this way, be counteracted efficiently. Moreover, the rotational speeds and torques which have to be exerted by the drives in order to bring or keep the nacelle at the position setpoint can be reduce because the system does not only react on changing external torques but anticipates them (see also figure 9).

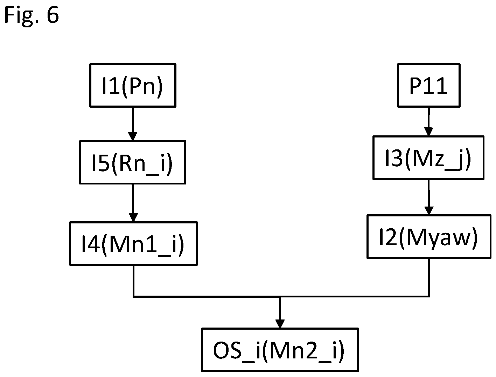

Figure 6 shows a flowchart of a second exemplary embodiment of the method. Again, the first information I1 being representative of the position setpoint Pn is provided. Depending on this first information I1, fifth information I5 is determined. The fifth information I5 is representative of rotational speed setpoints Rn_1 to Rn_6, Rn_i for short, for the drives d_i. The fifth information I5 may be determined, for example, by using a position controller. Then, fourth information I4 is determined depending on the fifth information I5. The fourth information I4 is representative of first torque setpoints Mn1_i for the drives d_i. The first torque setpoints Mn1_i may be determined with speed controllers.

Additionally, measurements P11 are provided. The measurements P11 are taken at the rotor blades b_1, b_2, b_3, b_j for short. The measurements are, for example, taken with help of strain sensors 31 which are assigned to the rotor blades b_j (see also figure 1). For example, each rotor blade b_j comprises a strain gauge sensor 31 or a fiber optic strain sensor 31. The strain sensors 31 may be attached to the roots of the rotor blades b_j.

Then, third information I3 is determined depending on the measurements P11, wherein the third information I3 is representative of bending moments of the rotor blades b_j. For example, the third information I3 is representative of the out-of-plane bending moments Mz_j of the rotor blades b_j. The second information I2 is then determined depending on the third information 13. For example, a Coleman transformation is used for this purpose. The second information I2 is then, in particular, representative of the yaw moment Myaw acting on the nacelle. The yaw moment is the moment trying to rotate the nacelle around an axis running vertically or parallel to the length axis of the tower.

In order to determine the operating setpoints OS_i for the drives d_i, the second information I2 and the fourth information I4 are combined, wherein the second information I2 is used in a feedforward manner. In this case, the operating setpoints OS_i are or are representative of second torque setpoints Mn2_1 to Mn2_6, Mn2_i for short, for the drives d_i. This second torque setpoints Mn2_i are, for example, the sum of the first torque setpoints Mn1_i and a value which is proportional to the yaw moment Myaw. This value may be the yaw moment Myaw divided by the number of drives d_i, for example.

The methods shown in figures 5 and 6 may be computer-implemented. For example, they are implemented in a computer program such that the computer program comprises instructions which, when executed by a control system, e.g. the control system of figure 7, cause the control system to execute the methods. The computer program can be stored on a computer-readable data carrier. Accordingly, figures 5 and 6 likewise show exemplary embodiments of the computer program and the computer-readable data carrier.

Figure 7 shows an exemplary embodiment of the control system 30 with which the described methods can be executed. For better illustration, only the drives d_1 and d_2 are shown.

The first information I1, which is representative of a position setpoint Pn of the carrier 4 or nacelle 40, is provided. Depending on this first information I1 and seventh information 17, a position controller P1 determines fifth information I5. The fifth information I5 is representative of rotational speed setpoints Rn_i of the drives d_i. Depending on this fifth information I5, speed controllers P2 determine the fourth information I4 which is representative of the first torque setpoints Mn1_1 to Mn1_6, Mn1_i for short. The operating setpoints OS_i for the drives d_i are then determined depending on the fourth I4 and the second I2 information, wherein the second information I2 is used in a feedforward pathway. The operating setpoints OS_i are then the second torque setpoints Mn2_i for the individual drives d_i or the operating setpoints OS_i are at least representative of the second torque setpoints Mn2_i. Drive control modules C convert the operating setpoints OS_i into actual electric signals with which the drives d_i are operated so that the drives d_i bring or keep the carrier 4 at the position setpoint Pn. The drive control modules C are explained in more detail in connection with figure 8.

The seventh information I7 is representative of the actual position Pa of the carrier 4 and can be determined, for example, with the help of the incremental encoder 23 as described in connection with figure 3. The seventh information I7 and the first information I1 are used in a negative feedback loop. From the deviation between the actual position Pa and the position setpoint Pn, the position controller P1 determines the fifth information I5.

Moreover, in order to achieve that the drives d_i rotate with the rotational speed setpoints Rn_i, sixth information I6 is provided which is representative of the actual rotational speeds Ra_i of the drives d_i. The sixth information I6 can be determined with the help of the incremental encoders 24, as explained in connection with figure 3. The sixth information I6 is used together with the fifth information I5 in negative feedback loops in order to minimize the respective differences between the rotational speed setpoints Rn_i and the actual rotational speeds Ra_i. The speed controllers P2 determine the fourth information I4 depending on the deviation between the actual rotational speeds Ra_i and the rotational speed setpoints Rn_i.

As mentioned before, the drives d_1 and d_2 may be operated such that they exert different torques. For this purpose, ninth information I9 is provided which is representative of a torque difference setpoint ΔMn. The torque difference setpoint ΔMn is compared to the actual torque difference ΔMa between the actual torques Ma_i of the drives d_i. The actual torque difference ΔMa can be derived from eighth information I8 which is representative of the actual torques Ma_i of the drives d_i. The actual torques Ma_i of the drives d_i can be extracted from the drive control modules C used for operating the drives d_i by using the electric signals with which the motors are actually operated.

Depending on the ninth I9 and the eighth I8 information, tenth information I10 is determined using a negative feedback loop. The tenth information I10 is representative of an offset rotational speed ΔRn and is determined with the help of a tension controller P4 depending on the deviation between the actual torque difference ΔMa and the torque difference setpoint ΔMn. For example, the offset rotational speed ΔRn is determined such that it increases with increasing difference between the torque difference setpoint ΔMn and the actual torque difference ΔMa.

As can be seen in figure 7, the offset rotational speed ΔRn is subtracted from the rotational speed setpoint Rn_1 determined for drive d_1 and the resulting value of the rotational speed is used as the rotational speed setpoint Rn_2 for the drive d_2. In this way, a torque difference can be realized between drive d_1 and drive d_2.

Figure 8 illustrates the operation of a drive control module C. A current converter PC1 determines a current setpoint In_i depending on the operating setpoint OS_i which, in this example, is the second torque setpoint Mn2_i. A further controller PC2 (e.g. a PI-controller) determines an absolute voltage value U and a phase shift ϕ depending on the current setpoint In_i and the actual current Ia_i. PWM-generators PWMG generate corresponding PWM signals with which IGBTs (not shown) are energized. The output thereof is three different phases u, v, w with which the drives d_i are then operated. Moreover, a motor model MM determines the actual current Ia_i, depending on the phases u, v, w. The actual current Ia_i and the current setpoint In_i are used in a negative feedback loop to adapt the voltage value U and the phase shift ϕ. Furthermore, the eighth information I8 is determined depending on the determined actual current Ia_i.

Figure 9 shows two different graphs each representing simulation results of a wind turbine. The upper graph shows the rotational speed of a drive which is needed to bring or keep the nacelle at the position setpoint as function of time. The lower graph shows the yaw position of the nacelle as a function of time. The curves S1, S3 show the operation of the wind turbine with an exemplary embodiment of the method, e.g. with the method of figures 5 or 6. The curves S2, S4 show the operation of the wind turbine with a method which does not consider the external torque acting on the nacelle. As can be seen, the curve S1 has significantly lower amplitudes of the maximal rotational speed than the curve S2. Moreover, curve S3 shows much less oscillations in the position of the nacelle than the curve S4. Moreover, the curves S2 and S4 indicate that the yaw system is nearly unstable.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference sign list:

- 4: nacelle carrier
- 10: rotor
- 11: electric motor
- 12: gearbox
- 13: pinion
- 20: tower
- 22: yaw bearing
- 23: incremental encoder
- 24: incremental encoder
- 30: control system
- 31: strain sensor
- 40: nacelle
- 100: wind turbine
- 104: foundation
- 112: rotor hub

- I1: first information
- I2: second information
- I3: third information
- I4: fourth information
- I5: fifth information
- I6: sixth information
- I7: seventh information
- I8: eighth information
- I9: ninth information
- I10: tenth information

- OS_i: operating setpoint
- d_i: drive
- b_j: rotor blade

- Pn: position setpoint

- Pa: actual position
- ΔMn: torque difference setpoint
- ΔMa: actual torque difference
- Rn_i: rotational speed setpoint
- Ra_i: actual rotational speed
- Ma_i: actual torque
- ΔRn: rotational speed offset
- Myaw: external torque/yaw moment
- Mz_j: bending moment
- Mn1_i: first torque setpoint
- Mn2_i: second torque setpoint

- P1: position controller
- P2: speed controller
- P4: tension controller
- C: motor control module
- PC1: current converter
- PC2: further controller
- U: absolute voltage
- Φ: phase shift
- In_i: current setpoint
- Ia_i: actual current
- PWMG: PWM generator
- u, v, w: phases
- MM: motor model
- P11: measurements

- S1 to S4: curves

## Claims

1. Method for operating a wind turbine (100) having a
• rotatable nacelle (40),
• a rotor (10) with at least one rotor blade (b_j), the rotor (10) being mounted on the nacelle (40), and
• at least one drive (d_i) for rotating the nacelle (40) by exerting torque,
wherein the method comprises
- providing first information (I1) which is representative of a position setpoint (Pn) of the nacelle (40);
- providing second information (I2) which is representative of an external torque (Myaw) acting on the nacelle (40) due to the aerodynamics of the rotor (10) during rotation caused by wind;
- determining an operating setpoint (OS_i) for the at least one drive (d_i) depending on the first (I1) and the second information (I2), wherein
- the operating setpoint (OS_i) is determined such that, when the at least one drive (d_i) is operated according to the operating setpoint (OS_i), the at least one drive (d_i) brings or keeps the nacelle (40) at the position setpoint (Pn) by exerting torque,
- the second information (I2) is used in a feedforward manner for the determination of the operating setpoint (OS_i).

2. Method according to claim 1, wherein
- the second information (I2) is determined depending on measurements (P11) taken at the at least one rotor blade (b_j).

3. Method according to claim 2, further comprising
- determining third information (I3) depending on the measurements (P11), wherein the third information (I3) is representative of at least one bending moment (Mz_j) acting on the at least one rotor blade (b_j), wherein
- the second information (I2) is determined depending on the third information (I3) by using a Coleman transformation,
- the second information (I2) is representative of the yaw moment (Myaw) acting on the nacelle (40).

4. Method according to any one of the preceding claims, wherein
- the method uses a controller (P2) which determines fourth information (I4) depending on the first information (I1),
- the operating setpoint (OS_i) is determined depending on a combination of the second information (I2) and the fourth information (I4).

5. Method according to claim 4, wherein the method further comprises
- providing fifth information (I5) which is representative of a rotational speed setpoint (Rn_i) of the at least one drive (d_i) for bringing or keeping the nacelle (40) at the position setpoint (Pn), wherein
- the controller (P2) is a speed controller and determines the fourth information (I4) depending on the fifth information (I5).

6. Method according to claim 5, wherein
- the fourth information (I4) is representative of a first torque setpoint (Mn1_i) for the at least one drive (d_i),
- the operating setpoint (OS_i) is representative of a second torque setpoint (Mn2_i) being the sum of the first torque setpoint (Mn1_i) and a value which is proportional to the external torque (Myaw).

7. Method according to claim 6, wherein
- the value being proportional to the external torque (Myaw) is the external torque (Myaw) divided by the number of drives (d_i) used for rotating the nacelle (40).

8. Method according to any one of claims 5 to 7, further comprising
- providing sixth information (I6) which is representative of the actual rotational speed (Ra_i) of the at least one drive (d_i), wherein
- the operating setpoint (OS_i) is determined also depending on the sixth (I6) information, namely by using a feedback loop with the fifth (I5) and the sixth (I6) information as input information so that the difference between the actual rotational speed (Ra_i) and the rotational speed setpoint (Rn_i) is minimized.

9. Method according to any one of the preceding claims, wherein
- providing seventh information (I7) which is representative of the actual position (Pa) of the nacelle (40); wherein
- the operating setpoint (OS_i) is also determined depending on the seventh information (I7), namely by using a feedback loop with the first (I1) and the seventh (I7) information as input information so that the difference between the actual position (Pa) and the position setpoint (Pn) is minimized.

10. Computer program comprising instructions which, when the program is executed by a control system, cause the control system to carry out the method of any one of claims 1 to 9.

11. Computer-readable data carrier having the computer program of claim 10 stored thereon.

12. Control system (30) comprising means for executing the method according to any one of claims 1 to 9.

13. Control system (30) according to claim 12, wherein
- the control system (30) comprises means (31) with the help of which a bending moment (Mz_j) of the at least one rotor blade (b_j) is determinable.

14. Control system (30) according to claim 13, wherein
- the means (31) comprises at least one strain sensor coupled to the at least one rotor blade (b_j).

15. Wind turbine (100) comprising
- a rotatable nacelle (40),
- a rotor (10) with at least one rotor blade (b_j), the rotor (10) being mounted on the nacelle (40),
- at least one drive (d_i) for rotating the nacelle (40) by exerting torque,
- the control system (30) according to any one of claims 12 to 14, wherein
- the control system (30) is signally connected to the at least one drive (d_i) in order to enable an operation of the at least one drive (d_i) according to the operating setpoint (OS_i).
